# FASCICULE DE BREVET EUROPEEN

(11) **EP 2 560 877 B1**
(45) Date de publication et mention de la délivrance du brevet: **27.04.2016**
(21) Numéro de dépôt: 11715986.3
(22) Date de dépôt: 24.03.2011
(51) Int. Cl.: B64D 29/00, F02K 1/76

(54) **AGENCEMENT DE BIELLES DE VOLETS D'INVERSION DE POUSSÉE SUR LA STRUCTURE INTERNE FIXE D'UNE NACELLE DE TURBORÉACTEUR**
THRUST REVERSER DOOR ASSEMBLY ON THE INNER PART OF AN ENGINE NACELLE
ANORDNUNG EINER PLEUELSTANGE FÜR SCHUBUMKEHRER AUF DIE INNERE STRUKTUR EINER TRIEBWERKSGONDEL

(30) Priorité: 20.04.2010 FR 1052972
(43) Date de publication de la demande: 27.02.2013
(73) Titulaire: Aircelle, 76700 Gonfreville l'Orcher (FR)
(72) Inventeur: VAUCHEL, Guy Bernard, F-76700 Harfleur (FR); SEGAT, Peter, F-76600 Le Havre (FR)
(74) Mandataire: Gaillarde, Frédéric F. Ch.
(86) Numéro de dépôt international: PCT/FR2011/050629
(87) Numéro de publication internationale: WO 2011/131874

(56) Documents cités:
- EP-A2- 1 495 963
- FR-A1- 2 920 197
- FR-A1- 2 920 199
- FR-A1- 2 930 973
- GB-A- 2 259 954
- US-A1- 2009 151 320

## Description

La présente invention se rapporte à un agencement de bielles de volets d'inversion de poussée sur la structure interne fixe d'une nacelle de turboréacteur.

Comme cela est connu en soi, un inverseur de poussée à grilles pour turboréacteur d'aéronef comprend typiquement une pluralité de volets solidaires du capot coulissant de cet inverseur, coopérant avec des bielles reliées à la structure interne fixe de l'inverseur de poussée.

Lorsque l'inverseur de poussée fonctionne en jet direct, les volets sont maintenus par les bielles dans le prolongement de la paroi interne du capot coulissant.

Lorsque l'inverseur de poussée fonctionne en jet inversé, les volets sont actionnés par les bielles de manière à obstruer la cavité de circulation de l'air secondaire du turboréacteur, et à dévier ainsi la veine d'air secondaire vers l'avant, permettant de réaliser une inversion de poussée et donc un freinage de l'aéronef équipé d'un tel inverseur.

Il est connu de placer des ressorts entre les bielles et les volets, de manière à compenser les écarts de tolérances et les déformations de structure lorsque les volets sont en position « jet direct », tout en permettant aux bielles d'assurer une pression suffisante sur ces volets dans cette position.

Différents types de ressorts ont été utilisés à ce jour, hélicoïdaux, à lames, ou encore en forme de U, comme enseigné par exemple par le document antérieur FR 2 920 197.

Dans les nacelles de conception récente, on cherche à réduire le plus possible l'épaisseur radiale du dispositif d'inversion de poussée dans la zone des grilles de déviation, en vue d'optimiser la nacelle tant en ce qui concerne le poids que l'aérodynamique.

Or, les ressorts susmentionnés présentent un encombrement radial qui va à l'encontre de cette réduction d'épaisseur.

De plus, dans certains cas, le débattement de l'extrémité de chaque bielle reliée par un ressort à son volet d'inversion associé, lors du pivotement de ce volet, nécessite un surcroît d'espace incompatible avec les contraintes susmentionnées de réduction d'épaisseur radiale.

La présente invention a ainsi pour but notamment de fournir des moyens élastiques de liaison des bielles à leur environnement qui soient compatibles avec la réduction d'épaisseur radiale susmentionnée.

On atteint ce but de l'invention avec un agencement comprenant au moins une bielle de volet d'inversion de poussée pour nacelle de turboréacteur, une structure interne fixe de cette nacelle, et des moyens élastiques comprenant un ressort adaptés pour relier cette bielle à cette structure interne fixe. Grâce à ces caractéristiques, il n'est plus nécessaire de prévoir des moyens de liaison élastique entre la bielle et le volet d'inversion de poussée, ce qui permet de réduire au minimum l'encombrement de la zone de coopération de la bielle avec ce volet, et donc de minimiser l'épaisseur radiale du dispositif d'inversion de poussée dans la zone des grilles de déviation.

Suivant d'autres caractéristiques optionnelles de la présente invention :
- lesdits moyens élastiques comprennent un ressort en U à deux branches,
- la concavité dudit ressort est adaptée pour être orientée vers l'amont de ladite nacelle : de la sorte, le ressort présente une meilleure résistance aux efforts d'arrachement exercés par la bielle,
- lesdits moyens élastiques comprennent un ressort de torsion,
- ladite bielle est reliée auxdits moyens élastiques par une goupille de liaison, et lesdits moyens élastiques comprennent des voiles à ouvertures oblongues recevant les extrémités de cette goupille, et aptes à retenir cette goupille en cas de cassure dudit ressort,
- lesdits moyens élastiques sont fixés dans une zone en creux de ladite structure interne fixe, formée sur la face de cette structure adaptée pour être en regard dudit turboréacteur, et munie d'un orifice de passage de ladite bielle,
- lorsque ladite structure interne fixe est formée dans un matériau composite en sandwich, ladite zone en creux est formée dans une partie monolithique de ce matériau,
- ladite zone en creux est bordée par une collerette elle-même bordée par un matelas d'isolation thermique de la face de ladite structure interne fixe adaptée pour être située en regard dudit turboréacteur,
- un couvercle de protection est rapporté sur ladite collerette,
- lesdits moyens élastiques comportent une butée de limitation de déformée en mode d'inversion.

La présente invention se rapporte également à une nacelle pour turboréacteur d'aéronef, comprenant au moins agencement conforme à ce qui précède.

D'autres caractéristiques et avantages de la présente invention apparaîtront à la lecture de la description qui va suivre et à l'examen des figures ci-annexées, dans lesquelles :
- la figure 1 représente une vue en coupe axiale d'un inverseur de poussée à grilles, incorporant l'agencement selon l'invention, cet inverseur étant représenté en position de jet direct,
- la figure 2 est une vue analogue à celle de la figure 1, l'inverseur étant représenté en position de jet inversé,
- la figure 3 est une vue de détail de la zone III de la figure 2,
- la figure 4, analogue à la figure 3, montre une variante de réalisation de l'agencement selon l'invention,
- la figure 5 représente, en perspective, un premier mode de réalisation du ressort de l'agencement selon l'invention,
- la figure 6 représente, en perspective partiellement éclatée, un deuxième mode de réalisation du ressort de l'agencement selon l'invention,
- la figure 7 est une vue en coupe selon le plan VII de la figure 3, lorsque l'agencement selon l'invention incorpore un ressort conforme à la figure 6, et
- la figure 8, analogue à la figure 7, représente l'agencement selon l'invention en cas de rupture du ressort.

Sur l'ensemble de ces figures, des références identiques ou analogues désignent des organes ou ensembles d'organes identiques ou analogues.

On a placé sur l'ensemble de ces figures un repère XYZ, dont les trois axes représentent respectivement les directions respectives longitudinale, transversale et verticale de la nacelle.

A noter que la flèche de l'axe X pointe vers l'amont de la nacelle, ce terme s'entendant par rapport au flux d'air destiné à traverser la nacelle en fonctionnement.

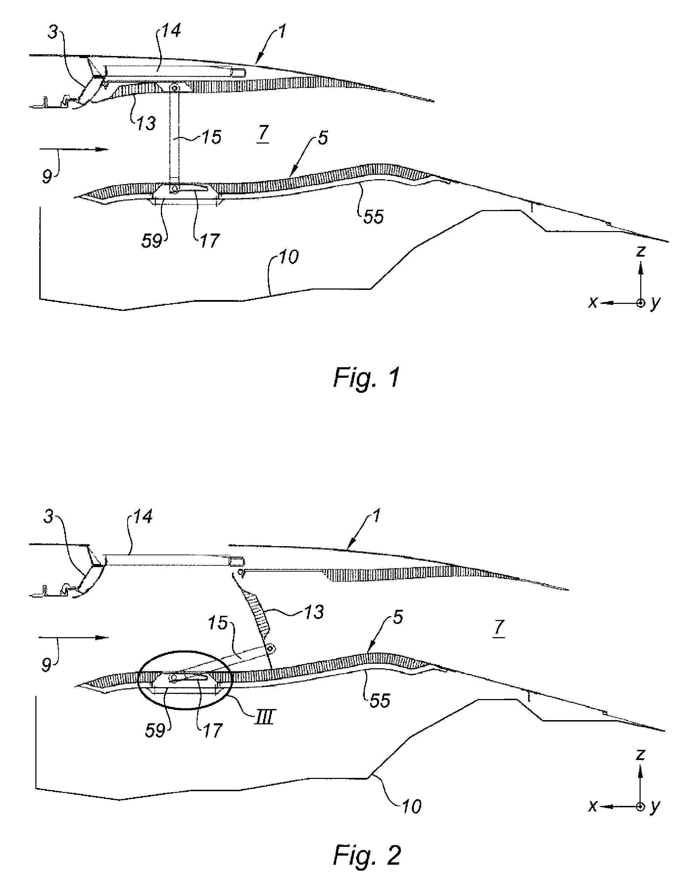

En se reportant à la figure 1, on a représenté un inverseur de poussée à grilles, comprenant typiquement un capot 1 monté coulissant par rapport à une structure fixe, laquelle comprend un cadre avant fixe 3 et une structure interne fixe 5.

Comme cela est connu en soi, le capot coulissant et la structure interne fixe 5 définissent entre eux une veine d'air froid annulaire 7.

En mode de fonctionnement normal, c'est-à-dire en croisière, l'air froid circule à l'intérieur de cette veine 7 comme indiqué par la flèche 9 de la figure 1, c'est-à-dire le long de la paroi intérieure du capot 1 et de la structure fixe interne 5.

Dans ce mode de fonctionnement, cet air froid 9 vient s'ajouter à l'air chaud sortant du turboréacteur 10, contribuant ainsi à la poussée d'un aéronef (non représenté).

En mode d'inversion de poussée (voir figure 2), le capot coulissant 1 circule vers l'arrière du turboréacteur, c'est-à-dire vers la droite de la figure 2 sous l'effet d'un actionneur tel qu'un vérin hydraulique (non représenté).

Ce coulissement a pour effet d'entraîner l'obturation de la veine annulaire 7 par une pluralité de volets 13 distribués tout autour de cette veine, un seul d'entre eux étant visible sur les figures 1 et 2, et la redirection du flux d'air frais vers l'avant de la nacelle (voir flèche 9' de la figure 2), à travers des grilles de déviation 14.

Chaque volet 13 est monté articulé sur le capot coulissant 1, et son mouvement de la position visible à la figure 1, dans laquelle il se situe dans le prolongement de la paroi interne du capot coulissant 1, vers sa position d'obturation visible à la figure 2, dans laquelle il se trouve en travers de la veine d'air froid 7, est obtenu sous l'action d'une bielle 15 dont les extrémités sont montées pivotantes respectivement sur la structure interne fixe 5 et sur le volet 13.

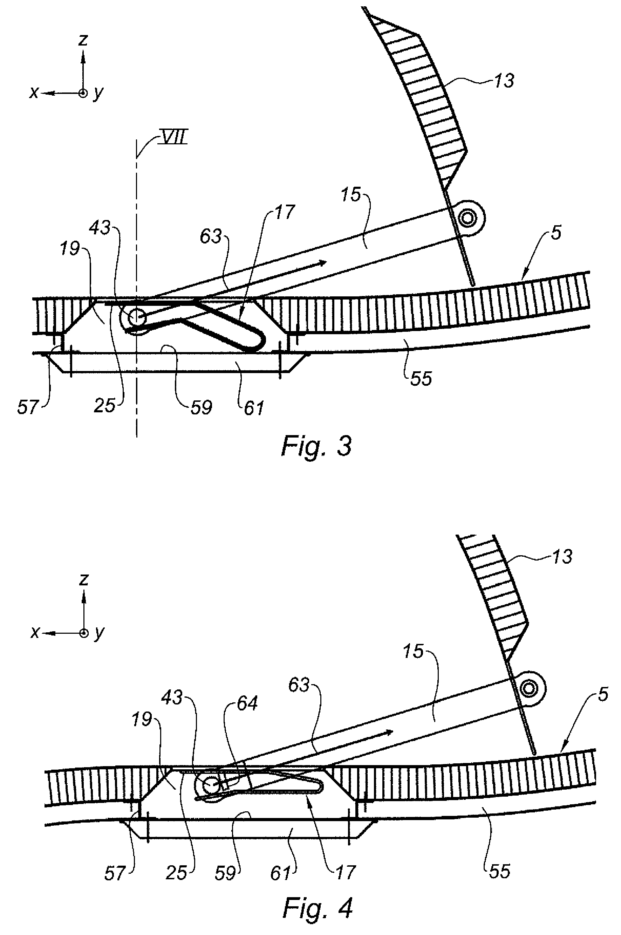

Selon l'invention, et comme cela est visible plus particulièrement sur les figures 3 et 4, la bielle 15 coopère avec la structure interne fixe 5 par l'intermédiaire d'un ressort 17.

Ce ressort 17 est placé dans une zone en creux 19 de la structure interne fixe 5, cette zone en creux étant disposée en vis-à-vis du turboréacteur 10.

Lorsque la structure interne fixe 15 est formée dans un matériau composite en sandwich, pouvant comprendre notamment des peaux intérieure et extérieure et une âme en nid d'abeille en vue de réaliser une absorption acoustique, la zone en creux 19 peut être formée par une partie monolithique de ce matériau, c'est-à-dire par une partie de matériau dans laquelle les peaux intérieure et extérieure sont directement collées l'une à l'autre, sans âme.

Une telle partie monolithique est dépourvue de caractéristiques d'absorption acoustique, mais présente une forte rigidité, propice à la fixation du ressort 17.

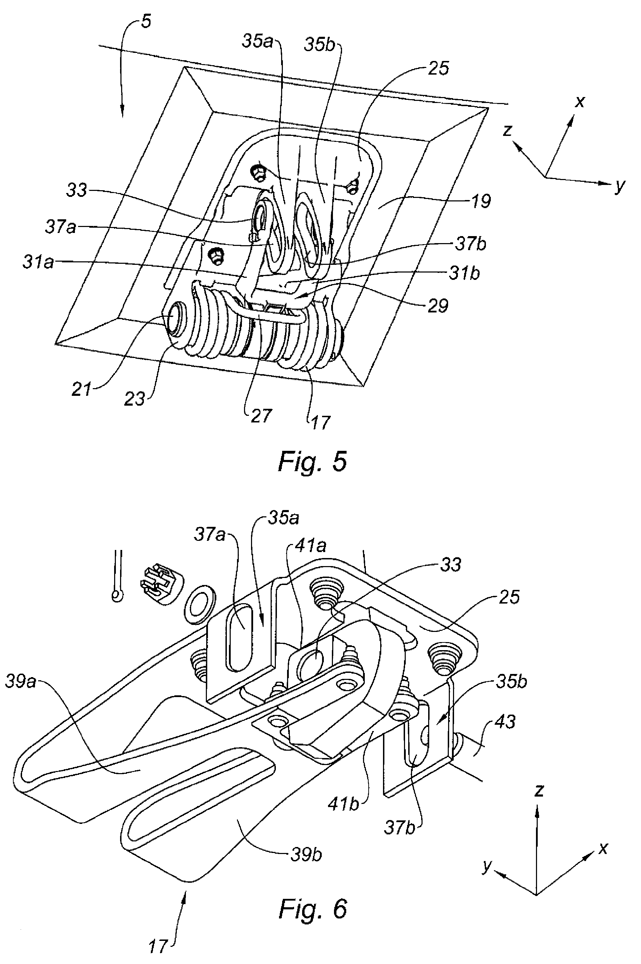

Dans un premier mode de réalisation visible à la figure 5, on peut voir que le ressort 17 peut être de type hélicoïdal : il est dans ce cas monté sur un axe physique 21 lui-même monté sur un palier 23 fixé dans la zone en creux 19 de la structure fixe 5 par l'intermédiaire d'une platine 25.

Une patte 27 du ressort 17 exerce un effort de rappel élastique sur un étrier 29 monté pivotant sur l'axe physique 21, cet étrier comportant deux branches 31 a, 31 b munies chacune d'un orifice 33 destiné à recevoir une goupille (non représentée) de fixation de l'extrémité de la bielle 15 qui traverse la structure interne fixe 5 sensiblement au centre de la zone en creux 19.

A noter que l'on prévoit deux voiles 35a, 35b solidaires de la platine 25, munis d'ouvertures oblongues respectives 37a, 37b situées en vis-à-vis des orifices 33 de l'étrier 29.

Dans un autre mode de réalisation visible à la figure 6, on peut voir que le ressort 17 est du type en U, c'est-à-dire qu'il comporte deux branches 39a, 39b en U, reliées entre elles par une platine 25 fixée à l'intérieur de la zone en creux 19 : un tel ressort est analogue à celui qui est enseigné par le document antérieur FR 2 920 197.

Chaque branche 39a, 39b supporte un demi-palier respectif 41 a, 41 b à l'intérieur duquel est formé un orifice 33, ces orifices 33 étant destinés à recevoir une goupille 43 de fixation de l'extrémité de la bielle 15.

Comme dans le mode réalisation précédent, on prévoit deux voiles 35a, 35b munis d'ouvertures oblongues respectives 37a, 37b situées en vis-à-vis des orifices 33 des demi-paliers 41 a, 41 b. Les voiles 35a et 35b peuvent être rapportés ou être intégrée au ressort.

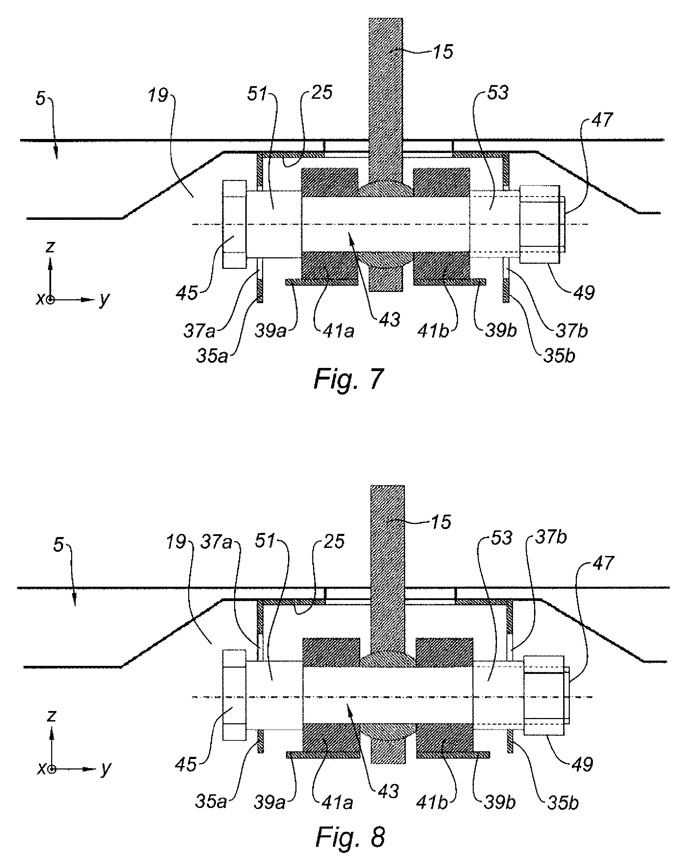

Plus précisément, en se reportant aux figures 7 et 8, on peut voir que la goupille 43 comporte de préférence une tête 45 et une tige à extrémité filetée 47 sur laquelle est vissé un écrou 49.

Des bagues 51 et 53 sont placées respectivement entre la tête 45 et le demi-palier 41 a, et entre le demi-palier 41 b et l'écrou 49.

Ces bagues 51 et 53 remplissent une fonction de centrage, c'est-à-dire qu'elles permettent de s'assurer que les deux extrémités de la goupille 43 s'étendent en permanence à travers les deux ouvertures oblongues 37a et 37b.

De la sorte, en cas de rupture du ressort 17, notamment dans la zone coudée des deux branches en U, la goupille 43 vient en butée contre le bord des ouvertures 37a et 37b, comme cela est visible sur la figure 8 : cette goupille, et donc la bielle 15, sont ainsi retenues, ce qui évite l'échappement et le battement de la bielle 15 à l'intérieur de la veine d'air froid 7.

A noter que dans le mode de réalisation de la figure 5, cette fonction de blocage en cas de rupture du ressort 17 est assurée de manière analogue par les voiles 35a, 35b et leurs ouvertures oblongues associées 37a, 37b.

On notera également que, dans les deux modes de réalisation des figures 5 et 6, les ouvertures oblongues 37a et 37b remplissent aussi une fonction de guidage de la goupille 43, évitant le décentrage de l'extrémité de la bielle 15.

De retour à présent aux figures 3 et 4, on peut voir que la structure interne fixe peut comporter, du côté du turboréacteur 10, un matelas de protection thermique 55.

Une collerette (ou cadre) 57 peut être fixée sur le bord de la zone en creux 19, cette collerette étant alors bordée à sa périphérie par le matelas de protection thermique 55.

Un couvercle de protection et d'étanchéité 59, lui-même éventuellement protégé par son propre matelas thermique 61, est de préférence fixé sur la collerette 57, de manière à protéger la zone en creux 19 dans laquelle se trouve le ressort 17.

Un seul couvercle peut être local et dédié à une seule ouverture ou recouvrir tout ou une partie des ouvertures. Le couvercle est maintenu par des fixations permettant l'étanchéité et un accès aisé à la zone en creux 19.

Sur les figures 3 et 4, la flèche 63 indique la direction des efforts exercés par la bielle 15 sur le ressort 17 en situation d'inversion de poussée, c'est-à-dire lorsque chaque volet 13 est en travers de la veine de flux froid 7.

Pour limiter l'action des efforts de cette bielle sur ce ressort dans cette configuration, on peut prévoir que le ressort 17 soit configuré de manière que la goupille 43 vienne en butée contre la platine 25, comme cela est visible à la figure 3, ou bien que la platine 25 comporte une butée 64 permettant de bloquer la goupille 43 sous l'effort de traction exercé par la bielle 15 : ceci permet d'éviter tout risque d'arrachement du ressort 27.

Comme on peut le comprendre à la lumière de ce qui précède, l'agencement selon l'invention permet de déporter dans la structure interne fixe 5 les moyens de liaison élastiques de la bielle 15 avec son environnement, et permet ainsi de réduire l'encombrement dans la zone de liaison de cette bielle 15 avec son volet d'inversion de poussée associé 13 : on peut de la sorte obtenir une nacelle présentant la finesse recherchée de lignes aérodynamiques.

Bien entendu, la présente invention n'est pas limitée au mode de réalisation décrit et représenté, fourni à titre de simple exemple.

## Revendications

1. Agencement comprenant au moins une bielle (15) de volet d'inversion de poussée (13) pour nacelle de turboréacteur et une structure interne fixe de cette nacelle, **caractérisé par** des moyens élastiques comprenant un ressort (17) adaptés pour relier cette bielle à cette structure interne fixe.

2. Agencement selon la revendication 1, dans lequel ledit ressort (17) est en U à deux branches (39a, 39b).

3. Agencement selon la revendication 2, dans lequel la concavité dudit ressort (17) est adaptée pour être orientée vers l'amont de ladite nacelle.

4. Agencement selon la revendication 1, dans lequel ledit ressort (17) est un ressort de torsion.

5. Agencement selon l'une quelconque des revendications précédentes, dans lequel ladite bielle (15) est reliée audit ressort (17) par une goupille de liaison (43), et dans lequel des voiles (35a, 35b) à ouvertures oblongues (37a, 37b) recevant les extrémités de cette goupille (43), sont aptes à retenir cette goupille en cas de cassure dudit ressort (17).

6. Agencement selon la revendication 1, dans lequel ledit ressort (17) est fixé dans une zone en creux (19) de ladite structure interne fixe (5), formée sur la face de cette structure adaptée pour être en regard dudit turboréacteur, et munie d'un orifice de passage de ladite bielle (15).

7. Agencement selon la revendication 1, dans lequel lorsque ladite structure interne fixe (5) est formée dans un matériau composite en sandwich, ladite zone en creux (19) est formée dans une partie monolithique de ce matériau.

8. Agencement selon la revendication 1, dans lequel ladite zone en creux (19) est bordée par une collerette (57) elle-même bordée par un matelas d'isolation thermique (55) de la face de ladite structure interne fixe (5) adaptée pour être située en regard dudit turboréacteur (10).

9. Agencement selon la revendication 1, dans lequel un couvercle de protection (59) est rapporté sur ladite collerette (57).

10. Agencement selon l'une quelconque des revendications précédentes, comportant une butée (64) de limitation de déformée en mode d'inversion.

11. Nacelle pour turboréacteur d'aéronef, comprenant au moins un agencement conforme à l'une quelconque des revendications précédentes.

## Patentansprüche

1. Anordnung, zumindest ein Gestänge (15) einer Schubumkehrklappe (13) für eine Turbotriebwerksgondel und eine interne feste Struktur dieser Gondel umfassend, durch elastische Mittel gekennzeichnet, die eine Feder (17) umfassen, die sich dazu eignen, um dieses Gestänge mit dieser internen festen Struktur zu verbinden.

2. Anordnung nach Anspruch 1, wobei die besagte Feder (17) die Form eines U mit zwei Schenkeln (39a, 39b) aufweist.

3. Anordnung nach Anspruch 2, wobei die Konkavität der besagten Feder (17) ausgeführt ist, um in die strömungsaufwärts befindliche Richtung der besagten Gondel ausgerichtet zu werden.

4. Anordnung nach Anspruch 1, wobei die besagte Feder (17) eine Torsionsfeder ist.

5. Anordnung nach irgendeinem der vorherigen Ansprüche, wobei das besagte Gestänge (15) durch einen Verbindungsbolzen (43) mit der besagten Feder (17) verbunden ist, und wobei die Laschen (35a, 35b) mit Langlöchern (37a, 37b), die die Enden dieses Bolzens (43) aufnehmen, imstande sind, diesen Bolzen zurückzuhalten, falls die besagte Feder (17) bricht.

6. Anordnung nach Anspruch 1, wobei die besagte Feder (17) in einer hohlen Zone (19) der besagten internen festen Struktur (5) befestigt ist, die auf der Fläche dieser Struktur gebildet wird, die imstande ist, um gegenüber dem besagten Turbotriebwerk zu liegen, und die mit einer Durchgangsbohrung für das besagte Gestänge (15) versehen ist.

7. Anordnung nach Anspruch 1, wobei, wenn die besagte interne feste Struktur (5) aus einem Schichtverbundmaterial gebildet wird, die besagte hohle Zone (19) in einem monolithischen Teil dieses Materials gebildet wird.

8. Anordnung nach Anspruch 1, wobei die besagte hohle Zone (19) durch einen Bund (57) umrandet wird, der selbst durch eine thermische Isolierungsdecke (55) der Fläche der besagten internen festen Struktur (5) umrandet ist, die imstande ist, um gegenüber dem besagten Turbotriebwerk (10) zu liegen.

9. Anordnung nach Anspruch 1, wobei ein Schutzdeckel (59) auf dem besagten Bund (57) angebracht wird.

10. Anordnung nach irgendeinem der vorherigen Ansprüche, einen Anschlag (64) zur Deformationsbegrenzung im Umkehrmodus umfassend.

11. Gondel für ein Turbotriebwerk eines Luftfahrzeugs, zumindest eine Anordnung nach irgendeinem der vorherigen Ansprüche umfassend.

## Claims

1. An arrangement comprising at least one connecting rod (15) of a thrust reverser flap (13) for a turbojet engine nacelle and an inner fixed structure of this nacelle, **characterized by** elastic means comprising a spring (17) adapted to link this connecting rod to this inner fixed structure.

2. The arrangement according to claim 1, wherein said spring (17) is a U-shaped spring with two branches (39a, 39b).

3. The arrangement according to claim 2, wherein the concavity of said spring (17) is adapted to be oriented upstream of said nacelle.

4. The arrangement according to claim 1, wherein said spring (17) is a torsion spring.

5. The arrangement according to any one of the preceding claims, wherein said connecting rod (15) is linked to said spring (17) by a connecting pin (43), and wherein webs (35a, 35b) with oblong openings (37a, 37b) receiving the ends of this pin (43), are capable of retaining this pin in case of breakage of said spring (17).

6. The arrangement according to claim 1, wherein said spring (17) is fastened in a hollow area (19) of said inner fixed structure (5), formed on the face of this structure adapted to face said turbojet engine, and provided with a passage port of said connecting rod (15).

7. The arrangement according to claim 1, wherein when said inner fixed structure (5) is formed of a sandwich composite material, said hollow area (19) is formed of a monolithic portion of this material.

8. The arrangement according to claim 1, wherein said hollow area (19) is edged by a flange (57) which is in turn edged by a heat-insulation blanket (55) of the face of said inner fixed structure (5) adapted to be located facing said turbojet engine (10).

9. The arrangement according to claim 1, wherein a protective cover (59) is attached on said flange (57).

10. The arrangement according to any one of the preceding claims, including a stop (64) for limiting the deformation in the reversal mode.

11. A nacelle for an aircraft turbojet engine, comprising at least one arrangement in accordance with any one of the preceding claims.
